# EUROPÄISCHE PATENTSCHRIFT

(11) **EP 2 287 108 B1**
(45) Veröffentlichungstag und Bekanntmachung des Hinweises auf die Patenterteilung: **04.06.2014**
(21) Anmeldenummer: 10007947.4
(22) Anmeldetag: 29.07.2010
(51) Int. Cl.: B67C 11/02

(54) **Einfülltrichter aus Papiermaterial oder ähnlichem Material**
Funnel made of paper or similar material
Entonnoir en papier ou matériel analogue

(30) Priorität: 18.08.2009 DE 102009038656
(43) Veröffentlichungstag der Anmeldung: 23.02.2011
(73) Patentinhaber: Maschewski, Wolfgang, 21266 Jesteburg (DE)
(72) Erfinder: Maschewski, Wolfgang, 21266 Jesteburg (DE)
(74) Vertreter: Hansmann, Dierk

(56) Entgegenhaltungen:
- JP-A- 10 250 794
- US-A- 2 100 888

## Beschreibung

Die Erfindung bezieht sich auf einen Einfülltrichter aus Papiermaterial oder ähnlichem Material zur Einwegnutzung, insbesondere zum Einfüllen von Motoröl, bestehend aus zwei zusammenhängend, benachbart angeordneten, aufeinander legbaren Flächenelementen wobei außenliegende Endkanten der aufeinanderliegenden Flächenelemente im Winkel zugeordnet sind und durch Spreizung der Flächenelemente ein Trichter gebildet wird, der ausgehend von einer unteren kleinen Austrittsöffnung zu einer oberen großen Einfüllöffnung verläuft.

Anordnungen dieser Art sind bekannt, wobei ein Zuschnitt durch dreiecksförmige Flächenelemente gebildet und die aufeinander gelegten Flächenelemente über eine Verbindungslasche an einer Endkante durch eine Klebverbindung verbindbar sind. Hierbei ist es üblich, den oberen und unteren Bereich bogenförmig auszustanzen.

Der Mangel bei einer derartigen Ausbildung besteht darin, daß ein aufwendiger Zuschnitt erforderlich ist und durch die vorhandene Ausbildung als Dreieckselemente eine maschinelle Klebverbindung über die Verbindungslasche nicht durchführbar ist.

Weiterhin ist aus der US 4.896.707 A ein Einfülltrichter bekannt, der durch einen Wickelvorgang manuell aus einem Flächenelement als Trichter formbar und über einen Klebestreifen in seiner Endposition fixierbar ist. Diese Ausbildung ist für einen Laien nicht handhabbar, da ein erhebliches Geschick für die Bildung eines Trichters erforderlich und die Verklebung schwierig durchführbar ist.

Ähnliche Ausbildungen sind aus der US 5.078.189 A und der US 2002/0038677 A1 bekannt geworden.

JP 10250794 offenbart folgende Merkmale aus Anspruch 1: einen Einfülltrichter, bestehend aus mehreren, aufeinander legbaren Flächenelementen, deren außenliegende Endkanten im Winkel zugeordnet sind und woraus ein Trichter gebildet wird, der ausgehend von einer unteren kleinen Austrittsöffnung zu einer oberen großen Einfüllöffnung verläuft, wobei das gefaltete Grundflächenelement rechteckig ist, sowie mehrere Dreiecksbereiche, die unter Beibehaltung einer unteren Austrittsöffnung umklappbar sind und wobei die umklappbaren Dreiecksbereiche durch Nutungen vorgegeben sind.

Weitere Ausbildungen von Trichtern sind nach der der US 2, 100, 888 A bekannt geworden, wobei ein Trichter durch einen Faltvorgang und Verbindung herstellbar ist. Die durchzuführende Faltung und Bildung des Trichters muss fachmännisch durchgeführt werden, um eine funktionsfähige Einheit zu schaffen.

Die Aufgabe der Erfindung ist es, eine Fertigungsvereinfachung für derartige Einfülltrichter für eine maschinelle Herstellung zu schaffen, die der Einwegnutzung Rechnung trägt und eine gute Handhabung auch durch Laien gewährleistet.

Die Lösung dieser Aufgabe erfolgt erfindungsgemäß dadurch, daß die gefalteten aufeinanderliegenden verbundenen Flächenelemente durch Rechtecke gebildet sind und ein von einer offenen Endkante ausgehender Dreiecksbereich unter Beibehaltung einer unteren Austrittsöffnung zur Trichterbildung umklappbar ist und der umklappbare Dreiecksbereich durch eine Nutung vorgegeben ist sowie die einander zugewandten Innenseiten der Dreiecksbereiche der aufeinanderliegenden Flächenelemente durch Verklebung verbunden sind.

Hierbei wird ermöglicht, einen einfachen Zuschnitt durchzuführen und den Aufwand für die Herstellung des Einfülltrichters gering zu halten. Auch eine Bevorratung ist durch die rechteckige Ausbildung in einer Ausgangsposition durch entsprechende Behältnisse einfacher als bei einer Dreiecksform. Durch die Wahl der Abmessungen der Flächenelemente als Rechteck sind entsprechend den Bedürfnissen Länge und Breite des Einfülltrichters leicht anpaßbar.

Ferner wird vorgeschlagen, daß die Verklebung durch aufgebrachte Klebespuren bzw. Leimpunkte gebildet ist.

Eine günstige Ausbildung wird dadurch geschaffen, daß die Flächenelemente durch Quadrate gebildet sind.

Alternativ wird vorgesehen, daß ein Flächenelement der aufeinanderliegenden Flächenelemente an seiner Außenseite eine umklappbare Lasche aufweist.

Hierzu ist in Weiterbildung vorgesehen, daß die Lasche des Flächenelementes durch eine Verklebung mit dem Flächenelement verbindbar ist.

Für eine vereinfachte Ausbildung ist vorgesehen, daß zwischen Flächenelement und Lasche eine Nutung aufgebracht ist.

Zur vereinfachten Handhabung ist vorgesehen, daß der umklappbare Dreiecksbereich durch eine Nutung vorgegeben ist.

In der Zeichnung ist ein Ausführungsbeispiel der Neuerung schematisch dargestellt. Es zeigen:

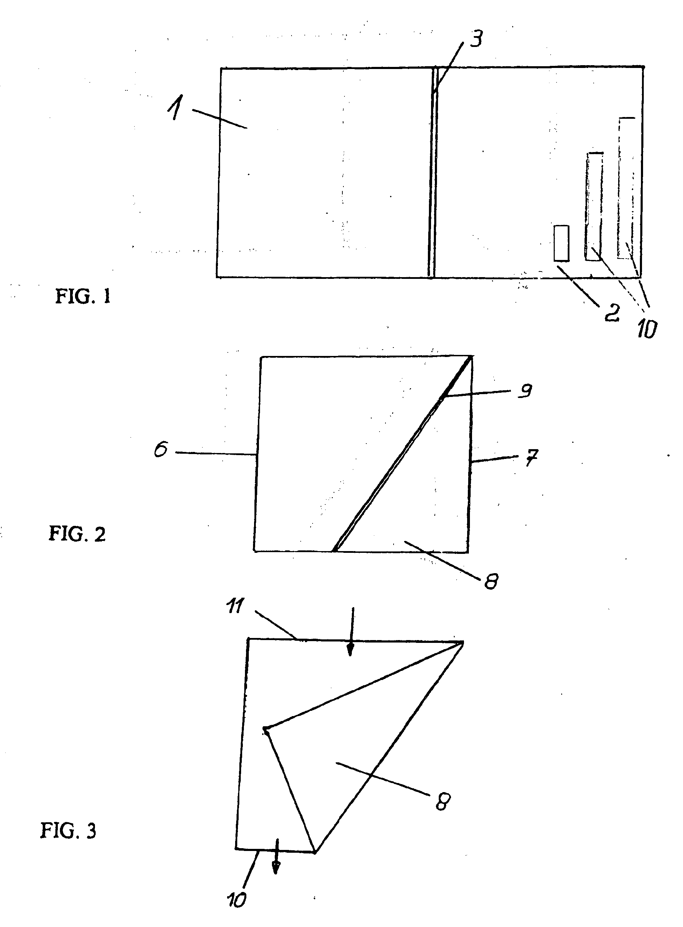

- Fig. 1: einen Zuschnitt einer Anordnung;
- Fig. 2: zusammengefügte aufeinander liegende Flächen- elemente mit einem durch eine Nutung abge- teilten Dreiecksbereich;
- Fig. 3: eine funktionsfähige Anordnung mit einem abge- winkelten Dreiecksbereich;
- Fig. 4: einen Zuschnitt einer Anordnung mit einer Lasche;
- Fig. 5: eine Anordnung mit aufeinanderliegenden Flächenelementen mit Lasche wie Fig. 2.

Die gezeigte Ausbildung besteht aus zwei quadratischen Flächenelementen 1 und 2, die zusammenhängend benachbart angeordnet und durch eine Nutung 3 zum Umklappen aufeinanderlegbar sind.

Ausgehend von einer offenen Endkante 7 ist ein Dreiecksbereich 8 über eine Nutung 9 umklappbar ausgebildet, wobei eine untere Austrittsöffnung 10 beibehalten wird. Gleichzeitig wird durch die Ausbildung eine obere Einfüllöffnung 11 gebildet. Nach Umklappen des Dreiecksbereiches 8 und durch Spreizung der bestehenden Bereiche der Flächenelemente 1 und 2 nach außen wird ein Einfülltrichter geschaffen. Die Dreiecksbereiche 8 sind über die einander zugewandten Innenseiten verklebt. Hierbei sind entsprechende Klebespuren 10 in diesen Bereichen aufgebracht.

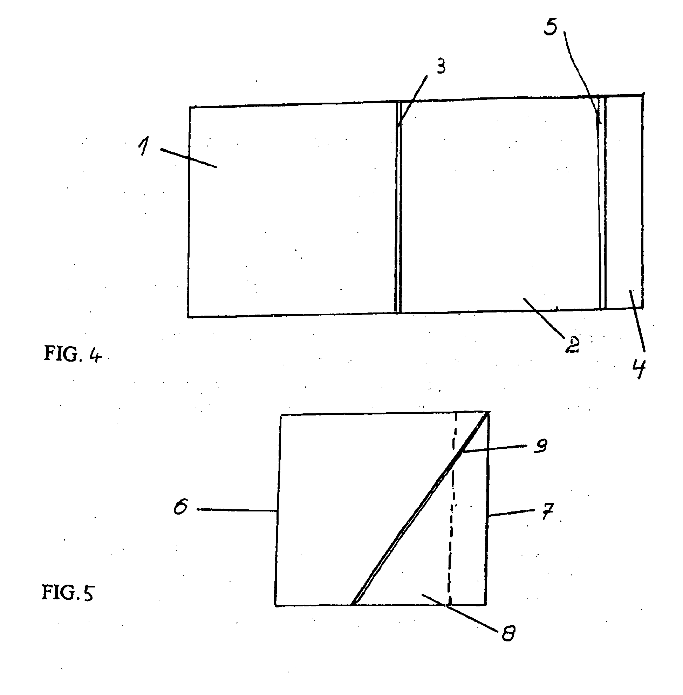

Nach einer weiteren Ausführungsform gemäß Fig. 4 und 5 ist das Flächenelement 2 durch eine Lasche 4 verlängert, die über eine Nutung 5 um 180 Grad verschwenkbar und durch eine maschinell durchzuführende Klebung mit dem Flächenelement 1 verbindbar ist, so daß eine Einheit mit geschlossenen Endkanten 6 und 7 gebildet ist. Auch hierbei wird der Dreiecksbereich 8 zur Bildung des Einfülltrichters umgeklappt.

## Patentansprüche

1. Einfülltrichter aus Papiermaterial oder ähnlichem Material zur Einwegnutzung, insbesondere zum Einfüllen von Motoröl, bestehend aus zwei zusammenhängend, benachbart angeordneten, aufeinander legbaren Flächenelementen (1, 2) wobei außenliegende Endkanten der aufeinanderliegenden Flächenelemente (1,2) im Winkel zugeordnet sind und durch Spreizung der Flächenelemente ein Trichter gebildet wird, der ausgehend von einer unteren kleinen Austrittsöffnung zu einer oberen großen Einfüllöffnung verläuft, wobei die gefalteten aufeinanderliegenden verbundenen Flächenelemente (1,2) durch Rechtecke gebildet sind und ein von einer offenen Endkante (7) ausgehender Dreiecksbereich (8) unter Beibehaltung einer unteren Austrittsöffnung (10) zur Trichterbildung umklappbar ist und der umklappbare Dreiecksbereich (8) durch eine Nutung (9) vorgegeben ist sowie die einander zugewandten Innenseiten der Dreiecksbereiche (8) der aufeinanderliegenden Flächenelemente (1,2) durch Verklebung verbunden sind.

2. Einfülltrichter nach Anspruch 1, **dadurch gekennzeichnet, daß** die Verklebung durch aufgebrachte Klebespuren (10) bzw. Leimpunkte gebildet ist.

3. Einfülltrichter nach Anspruch 1 oder 2, **dadurch gekennzeichnet, daß** die Flächenelemente (1, 2) durch Quadrate gebildet sind.

4. Einfülltrichter nach Anspruch 1, **dadurch gekennzeichnet, daß** ein Flächenelement (2) der aufeinanderliegenden Flächenelemente (1, 2) an seiner Außenseite eine umklappbare Lasche (4) aufweist.

5. Einfülltrichter nach Anspruch 4, **dadurch gekennzeichnet, daß** die Lasche (4) des Flächenelementes (2) durch eine Verklebung mit dem Flächenelement (1) verbindbar ist.

6. Einfülltrichter nach Anspruch 4 oder 5, **dadurch gekennzeichnet, daß** zwischen Flächenelement (2) und Lasche (4) eine Nutung (5) aufgebracht ist.

## Claims

1. A filling funnel made of paper material or a similar material for disposable use, in particular for filling engine oil, comprising two contiguously, adjacently arranged planar elements (1, 2) which can be placed on top of one another, wherein outer end edges of the planar elements (1, 2) lying on top of one another are associated at an angle and, by spreading the planar elements apart, a funnel is formed which, starting from a lower small discharge opening, extends to an upper large filling opening, wherein the folded connected planar elements (1, 2) lying on top of one another are in the form of rectangles and a triangular region (8) extending from an open end edge (7) can be folded over whilst maintaining a lower discharge opening (10) so as to form a funnel and the triangular region (8) which can be folded over is specified by a groove (9) and the mutually facing inner sides of the triangular regions (8) of the planar elements (1, 2) lying on top of one another are connected by adhesion.

2. A filling funnel according to Claim 1, **characterised in that** the adhesion is created by the application of adhesive tracks (10) or glue points.

3. A filling funnel according to Claim 1 or 2, **characterised in that** the planar elements (1, 2) are in the form of squares.

4. A filling funnel according to Claim 1, **characterised in that** a planar element (2) of the planar elements (1, 2) lying on top of one another has a foldable tab (4) on its outer side.

5. A filling funnel according to Claim 4, **characterised in that** the tab (4) of the planar element (2) can be connected to the planar element (1) by adhesion.

6. A filling funnel according to Claim 4 or 5, **characterised in that** a groove (5) is applied between the planar element (2) and the tab (4).

## Revendications

1. Entonnoir de remplissage à usage unique, en matière à base de papier ou de matière similaire, destiné en particulier au remplissage d'huile moteur, lequel consiste en deux éléments plats (1, 2) qui peuvent être pliés l'un sur l'autre, sachant que les éléments plats (1, 2), pliés l'un sur l'autre, sont dotes de bords d'extrémité situés vers l'extérieur, qui sont disposés angulairement, et que, par écartement des éléments plats, peut être formé un entonnoir, qui, partant d'une petite ouverture inférieure, destinée à l'évacuation, s'étend vers une grande ouverture supérieure, destinée au remplissage, sachant que les éléments plats (1, 2) reliés ensemble, pliés l'un sur l'autre, sont formés par des rectangles et qu'une zone triangulaire (8), qui part d'un bord d'extrémité ouvert (7), peut être rabattue vers le bas pour former un entonnoir tout en conservant une ouverture inférieure (10), destinée à l'évacuation, et que la zone triangulaire (8) rabattable est prédéterminée par un rainurage (9) et que les deux faces intérieures de la zone triangulaire (8) des éléments plats (1, 2) pliés l'un sur l'autre sont collées ensemble.

2. Entonnoir de remplissage selon la revendication 1,
**caractérisé en ce que** le collage est effectué par des applications de trainées de colle (10), respectivement par des points de colle.

3. Entonnoir de remplissage selon revendication 1 ou 2,
**caractérisé en ce que** les éléments plats (1, 2) sont formés par des carrés.

4. Entonnoir de remplissage selon la revendication 1,
**caractérisé en ce que** l'un (2) des éléments plats (1, 2), pliés l'un sur l'autre, est doté, sur sa face extérieure d'un rabat (4).

5. Entonnoir de remplissage selon la revendication 4,
**caractérisé en ce que** le rabat (4) de l'élément plat (2) peut être relié par collage à l'élément plat (1).

6. Entonnoir de remplissage selon revendication 4 ou 5,
**caractérisé en ce qu**'un rainurage (5) est prévu entre l'élément plat (2) et le rabat (4).
